# EUROPÄISCHE PATENTSCHRIFT

(11) **EP 1 631 617 B1**
(45) Veröffentlichungstag und Bekanntmachung des Hinweises auf die Patenterteilung: **10.01.2007**
(21) Anmeldenummer: 04731366.3
(22) Anmeldetag: 06.05.2004
(51) Int. Cl.: C08J 3/00, C08J 3/07, C08L 79/04, C08L 79/06, C08G 61/00, C08G 61/12

(54) **DISPERSIONEN STEIFKETTIGER, KONJUGIERTER POLYMERE, VERFAHREN ZU DEREN HERSTELLUNG UND DEREN VERWENDUNG ZUR HERSTELLUNG ELEKTRONISCHER BAUELEMENTE**
DISPERSIONS OF RIGID-CHAIN CONJUGATED POLYMERS, METHOD FOR THE PRODUCTION AND USE THEREOF FOR PRODUCING ELECTRONIC COMPONENTS
DISPERSIONS DE POLYMERES CONJUGUES A CHAINES RIGIDES, PROCEDE DE FABRICATION ET UTILISATION DANS LA FABRICATION DE COMPOSANTS ELECTRONIQUES

(30) Priorität: 03.06.2003 DE 10325102
(43) Veröffentlichungstag der Anmeldung: 08.03.2006
(73) Patentinhaber: Fraunhofer-Gesellschaft zur Förderung der angewandten Forschung e.V., 80686 München (DE)
(72) Erfinder: JANIETZ, Silvia, 14532 Stahnsdorf (DE); KRÜGER, Hartmut, 14469 Potsdam (DE); WEDEL, Armin, 14513 Teltow (DE); SAINOVA, Dessislava, 14467 Potsdam (DE)
(86) Internationale Anmeldenummer: PCT/EP2004/004839
(87) Internationale Veröffentlichungsnummer: WO 2004/106414

(56) Entgegenhaltungen:
- US-A- 4 963 616
- US-A- 5 114 610

## Beschreibung

### Technisches Gebiet

Die vorliegende Erfindung betrifft Dispersionen steifkettiger, konjugierter Polymere, ein Verfahren zu deren Herstellung und deren Verwendung zur Herstellung elektronischer Bauelemente.

Insbesondere betrifft die Erfindung die Herstellung verarbeitungsfähiger Dispersionen solcher Polymere, deren Teilchengröße im Nanometerbereich liegt und die in elektronischen Bauelementen, wie z.B. Feldeffekttransistoren, organischen Leuchtdioden oder photovoltaischen Zellen, als aktive Materialien verwendet werden können.

### Hintergrund der Erfindung

Steifkettige, konjugierte Polymere sind insbesondere wegen ihrer halbleitenden Eigenschaften als aktive Materialien für elektronische Bauelemente von Interesse. Dazu zählen unter anderen aromatische heterocyclische Leiterpolymere, wie z.B. Poly(benzobis-imidazobenzo-phenanthrolin) (BBL); Polychinoline, Polybenzthiazole, Polybenzimidazole, Polyheterodiazole.

Solche Polymere, die im Idealfall Stäbchengestalt aufweisen, sind normalerweise in üblichen organischen Lösemitteln, wie auch in Wasser und in wässrigen Lösemitteln bzw. Lösemittelgemischen, vollkommen unlöslich. Trotz ihrer interessanten mechanischen und elektrischen Eigenschaften, die sich aus der nahezu parallelen Anordnung der stäbchenförmigen, konjugierten Moleküle im Festkörper ableiten, wie ihrer hohen Thermostabilität, guten mechanischen Festigkeit und ihres halbleitenden Charakters, konnten sich diese bisher für technisch relevante Produkte nicht durchsetzen. Der Grund kann darin gesehen werden, dass sie nur in konzentrierten Säuren, wie z.B. Schwefelsäure, Methansulfonsäure, oder auch durch Komplexierung mit Lewis-Säuren (Nitroalkan/Lewis-Säure-Gemische; S. A. Jenekhe, P. O. Johnson, Macromolecules 1990, 23, 4419 - 4429) ausreichend löslich sind und eine Verarbeitung aus diesen Lösungen technisch nicht praktikabel ist.

Es ist jedoch zu erwarten, dass diese steifkettigen, konjugierten Polymere aufgrund ihrer stäbchenförmigen Anordnung und ihrer halbleitenden Eigenschaften im Festkörper interessante elektronische Eigenschaften zeigen.

### Stand der Technik

Kürzlich publizierten Jenekhe et al. Ergebnisse zu einem Dünn-Schicht-Transistor, der als aktive Schicht das Leiterpolymer Poly(benzobisimidazobenzo-phenanthrolin) (BBL) enthielt (A. Babel, S. A. Jenekhe, Adv. Mater. 2002,14, 371-374). Es konnte nachgewiesen werden, dass es mit diesem Material möglich ist, erstmalig einen n-halbleitenden Polymertransistor mit Elektronenbeweglichkeiten bis zu 5 x 10⁻⁴ cm²/Vs herzustellen. Dieses ließ sich jedoch nur durch ein sehr aufwendiges, technisch wenig praktikables Schichtbildungsverfahren realisieren. Dabei wurde das steifkettige BBL in Methansulfonsäure gelöst, um daraus mittels Spin-coating dünne Schichten herzustellen. Erst durch komplizierte Waschvorgänge (Behandlung mit 10%-iger Triethylamin-Lösung in Ethanol, Waschen mit Wasser und Trocknen im Vakuum bei 60°C) lässt sich dann die erhaltene aktive Schicht verwenden. Im Labormaßstab ist diese Vorgehensweise noch praktikabel, nicht jedoch für technische Verfahren.

Eine Löslichkeit der oben beschriebenen steifkettigen, konjugierten Polymere in üblichen organischen Lösemitteln, wie Chloroform, Toluen, Xylen u.a., kann ggf. zwar durch laterale Substitution mit z.B. Alkyl-, Alkoxy- oder Dialkylaminogruppen erreicht werden. Dafür ist jedoch in der überwiegenden Zahl der Polymersynthesen ein deutlich höherer Syntheseaufwand erforderlich. In vielen Fällen ist die Substitution auch nur eingeschränkt möglich (z.B. im Fall von BBL). Außerdem können laterale Substitutionen die elektronischen Eigenschaften negativ beeinflussen. Das Löslichmachen eines steifkettigen, konjugierten Polymers durch Einführung lateraler Substituenten in die Polymerstruktur stellt deshalb in der Regel keinen praktikablen oder vorteilhaften Weg zur Herstellung verarbeitungsfähiger Lösungen oder Dispersionen dieser Materialien dar.

### Zusammenfassung der Erfindung

Der Erfindung lag daher die Aufgabe zu Grunde, ein Verfahren bereitzustellen, durch das steifkettige, konjugierte Polymere, die in organischen Lösemitteln unlöslich sind, in eine Form überführt werden können, in der sie praktisch verarbeitbar sind und die sich insbesondere zur Herstellung dünner Filme dieser Polymere eignet.

Diese Aufgabe wird erfindungsgemäß gelöst durch ein Verfahren zur Herstellung einer Dispersion eines steifkettigen, konjugierten, in organischen Lösemitteln unlöslichen Polymers in einem wässrigen oder organischen oder wässrig-organischen Dispersionsmedium, umfassend die Stufen: (a) Herstellen einer Lösung des Polymers in einer starken Säure oder in einem flüssigen Gemisch, das eine Lewis-Säure enthält; und (b) Einbringen der in der Stufe a) hergestellten Lösung in eine wässrige Tensid-Lösung, so dass eine Dispersion des Polymers entsteht.

Erfindungsgemäß wird dadurch eine Dispersion eines steifkettigen, konjugierten, in organischen Lösemitteln unlöslichen Polymers in einem wässrigen oder organischen oder wässrig-organischen Dispersionsmedium bereitgestellt, wobei die Größe der dispergierten Polymerteilchen im Bereich von 10 bis 800 nm liegt.

Des Weiteren umfasst die Erfindung die Verwendung einer solchen Dispersion zur Herstellung eines dünnen Films eines steifkettigen, konjugierten Polymers und zur Herstellung eines elektronischen Bauelements.

### Kurze Beschreibung der Zeichnungen

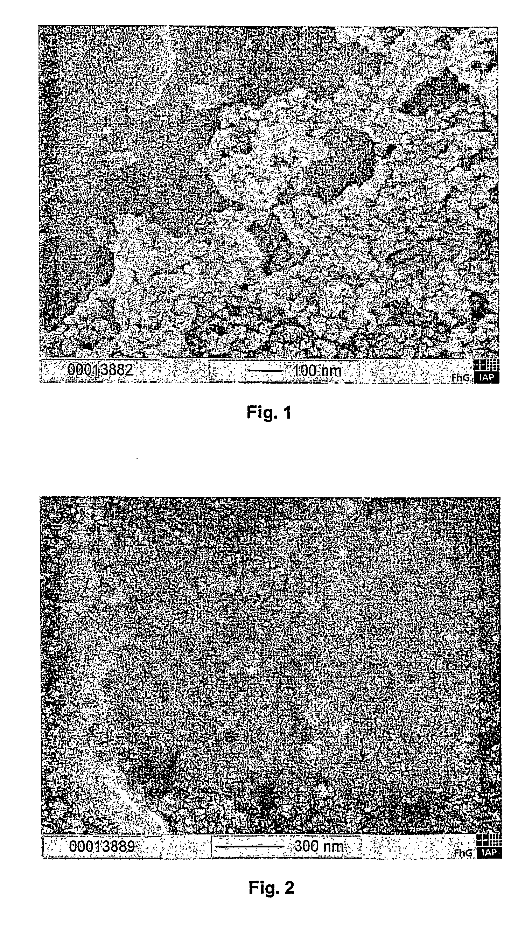

Fig. 1 zeigt eine rasterelektronische Aufnahme eines dünnen Films aus BBL-Teilchen auf Al (BBL-Teilchen in 0,1%-iger Tensid/Wasserlösung, Feststoffgehalt 1%).
Fig. 2 zeigt eine rasterelektronische Aufnahme eines dünnen Films aus BBL-Teilchen auf Al (BBL-Teilchen in 1%-iger Tensid/Wasserlösung, Feststoffgehalt 1%).

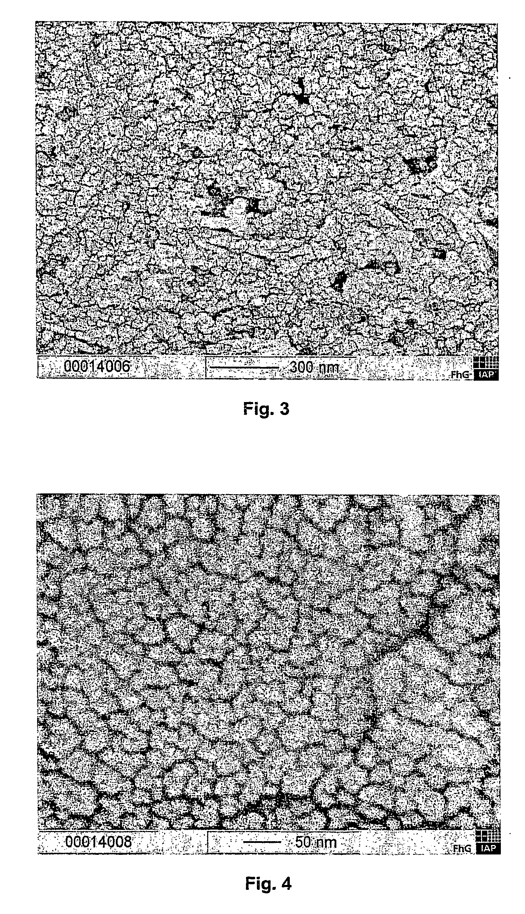

Fig. 3 zeigt eine rasterelektronische Aufnahme eines dünnen Films aus BBL-Teilchen auf Al (BBL-Teilchen in 0,1%-iger Tensid/THF-Lösung, Feststoffgehalt 1%).
Fig. 4 zeigt eine Aufnahme eines Films wie in Fig. 3 gezeigt in vergrößerter Darstellung.
Fig. 5 zeigt die Kennlinien eines organischen Feldeffekttransistors (OFET), der unter Verwendung einer erfindungsgemäßen Dispersion von Poly(benzobisimidazobenzo-phenanthrolin) (BBL)-Teilchen hergestellt wurde.

### Beschreibung bevorzugter Ausführungsformen der Erfindung

Bei den in dem erfindungsgemäßen Verfahren eingesetzten Polymeren handelt es sich um steifkettige, konjugierte Polymere, die in organischen Lösemitteln, insbesondere in üblichen organischen Lösemitteln, wie Chloroform, Toluen oder Xylen, unlöslich sind.

Zu den in dem erfindungsgemäßen Verfahren einsetzbaren steifkettigen, konjugierten Polymeren gehören insbesondere aromatische heterocyclische Leiterpolymere, Polychinoline, Polybenzthiazole, Polybenzimidazole, Polyheterodiazole und Gemische davon.

Die Strukturformeln typischer Polyheterodiazole (Formel (I)), Polychinoline (Formel (II)) und Polybenzthiazole bzw. Polybenzimidazole (Formel (III) sind nachfolgend dargestellt:

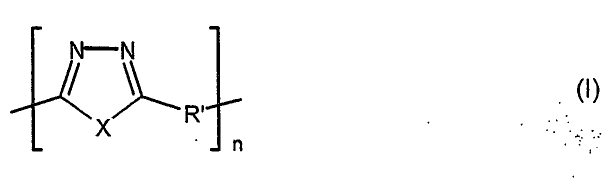

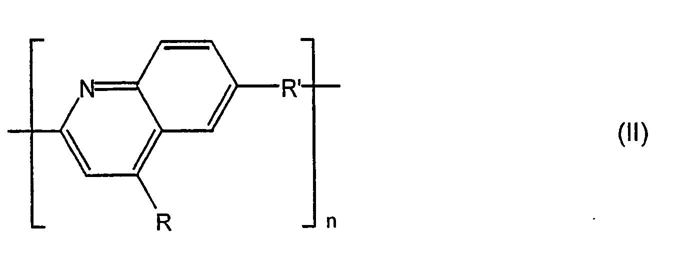

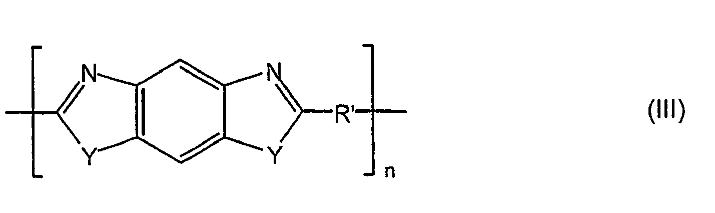

Darin steht R' jeweils für einen zweiwertigen aromatischen oder heteroaromatischen Rest; R für eine Aryl- oder Aralkylgruppe; X für N-Alkyl, N-Aryl, O, S oder SO₂; und Y unabhängig für N-H, N-Alkyl, N-Aryl, O oder S.

Insbesondere eignet sich das erfindungsgemäße Verfahren zur Herstellung von Dispersionen von Poly(benzobisimidazbenzo-phenanthrolin) (BBL), dessen Struktur in der Formel (IV) gezeigt ist.

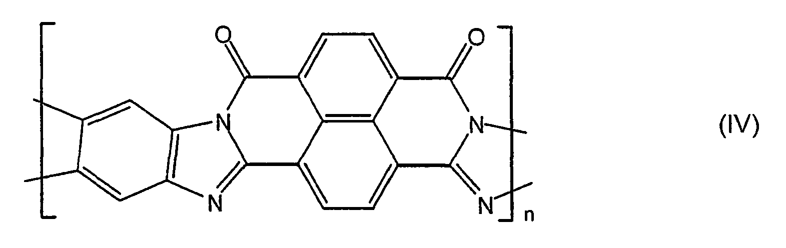

Die in dem erfindungsgemäßen Verfahren eingesetzten Polymere besitzen bei Raumtemperatur typischerweise intrinsische Viskositäten in Methansulfonsäure von 1,3 bis 6 dl/g, bevorzugt 1,5 bis 3 dl/g.

Das Dispersionsmedium der nach dem erfindungsgemäßen Verfahren hergestellten Dispersionen ist ein wässriges oder organisches oder wässrig-organisches Dispersionsmedium. Demnach besteht das Dispersionsmedium im Wesentlichen aus Wasser oder einem organischen Lösemittel, wie z.B. Chloroform, Toluen, Xylen, Tetrahydrofuran (THF) oder Cyklohexanol. Das Dispersionsmedium kann auch aus einem Gemisch aus Wasser und einem mit Wasser mischbaren organischen Lösemittel bestehen. Insbesondere ist das Dispersionsmedium im Wesentlichen frei von Substanzen, die die Verarbeitung der Dispersion, insbesondere im technischen Maßstab, wesentlich erschweren. Zu solchen Substanzen gehören insbesondere starke Säuren, stark korrosive Substanzen oder stark toxische Substanzen. Demgemäß sind die nach dem erfindungsgemäßen Verfahren hergestellten Dispersionen insbesondere in üblichen Verfahren zur Herstellung dünner Polymerfilme verarbeitbar.

In der ersten Stufe des erfindungsgemäßen Verfahrens wird das Polymer in einer starken Säure oder in einem flüssigen Gemisch, das eine Lewis-Säure enthält, gelöst. Die starke Säure ist bevorzugt Methansulfonsäure oder konzentrierte Schwefelsäure oder ein Gemisch davon. Das Gemisch, das eine Lewis-Säure enthält, ist bevorzugt ein Gemisch einer Lewis-Säure mit einem Nitroalkan oder einem Nitroaromaten, wie Nitromethan oder Nitrobenzol. Die Lewis-Säure ist bevorzugt GaCl, AlCl₃, FeCl₃, oder SbCl₃. Der Gehalt der Lewis-Säure in dem Gemisch beträgt bevorzugt 30 bis 90 Gew.-%.

Die Konzentration des Polymers in der in der ersten Stufe des erfindungsgemäßen Verfahrens hergestellten Lösung beträgt typischerweise 0,1 bis 5 Gew.-%, bevorzugt 0,5 bis 2 Gew.-%.

In der zweiten Stufe des erfindungsgemäßen Verfahrens wird die in der ersten Stufe hergestellte Lösung in eine wässrige Tensidlösung eingebracht. Dies geschieht so, dass das Polymer dabei eine Dispersion bildet. Zur Bildung einer stabilen Dispersion wird das Einbringen der Lösung des Polymers in die wässrige Tensidlösung bevorzugt unter Einwirkung von Ultraschall durchgeführt. Hierzu eignen sich insbesondere handelsübliche Ultraschallhomogenisatoren.

Als Tenside eignen sich Ethoxylate und Polyethylenglykole und insbesondere Fettamin-Oxethylate. Diese sind grundsätzlich basischer Natur.

Die in der zweiten Stufe des erfindungsgemäßen Verfahrens erhaltene Dispersion des steifkettigen, konjugierten Polymers enthält das in der ersten Stufe eingesetzte Lösemittel (starke Säure oder flüssiges Gemisch, das eine Lewis-Säure enthält) nur noch in stark verdünnter Form. Dennoch wird grundsätzlich bevorzugt, anschließend noch folgende Stufen durchzuführen: Abtrennen des dispersen Polymers von der flüssigen Phase der in der zweiten Stufe erhaltenen Dispersion; Waschen des abgetrennten Polymers und Redispergieren des gewaschenen Polymers in einer wässrigen oder organischen Tensidlösung.

Das Abtrennen des dispersen Polymers kann insbesondere durch Zentrifugieren und Abdekantieren der überstehenden Lösung erfolgen. Das abgetrennte Polymer (Zentrifugat) kann dann in Wasser wiederaufgenommen werden, um es zu waschen. Dieser Vorgang (Zentrifugieren und Wiederaufnehmen in Wasser) wird bevorzugt so lange wiederholt, bis der pH-Wert der überstehenden Lösung neutral ist.

Nach dem Waschen wird das disperse Polymer in einer wässrigen oder organischen Tensidlösung redispergiert. Auch dieses Redispergieren erfolgt bevorzugt unter Einwirkung von Ultraschall. Als Dispersionsmedium eignet sich insbesondere eine Lösung eines der voranstehend erwähnten Tenside in Wasser oder in einem organischen Lösemittel, wie Chloroform, Toluol, Tetrahydrofuran oder Cyklohexanon, oder in einem Gemisch aus Wasser und einem in Wasser löslichen organischen Lösemittel, wie Tetrahydrofuran. Die Konzentration der in dem erfindungsgemäßen Verfahren eingesetzten Tensidlösungen beträgt bevorzugt jeweils 0,01 bis 5 Gew.-%, mehr bevorzugt 0,05 bis 2 Gew.-%.

Durch das erfindungsgemäße Verfahren wird eine Dispersion eines steifkettigen, konjugierten, in organischen Lösemitteln unlöslichen Polymers in einem wässrigen oder organischen oder wässrig-organischen Dispersionsmedium bereitgestellt, wobei die Größe der dispergierten Polymerteilchen im Bereich von 10 bis 800 nm, bevorzugt 10 bis 100 nm, liegt. Das Dispersionsmedium besteht dabei, abgesehen von darin enthaltenen Tensiden, im Wesentlichen aus Wasser oder einem organischen Lösemittel, wie z.B. Chloroform, Toluol, Tetrahydrofuran oder Cyklohexanon, oder aus einem Gemisch aus Wasser und einem mit Wasser mischbaren organischen Lösemittel, wie z.B. Tetrahydrofuran. Insbesondere ist das Dispersionsmedium der erfindungsgemäßen Dispersionen frei von Substanzen, die die technische Verarbeitung der Dispersion zur Herstellung dünner Filme steifkettiger, konjugierter Polymere wesentlich erschweren, wie z.B. starke Säuren.

Die erfindungsgemäßen stabilen Dispersionen eignen sich demgemäß insbesondere zur Herstellung dünner Schichten durch Drop-casting oder Spin-coating Prozesse. Solche dünnen Schichten können insbesondere als aktive Ladungsträgerschichten in elektronischen Bauelementen, wie z.B. Feldeffekttransistoren, organischen Leuchtdioden oder photovoltaischen Zellen, eingesetzt werden.

### Beispiele

Nachfolgend wird die Erfindung anhand von Herstellungs- und Anwendungssbeispielen näher erläutert. Die Synthese des dabei eingesetzten Leiterpolymeren Poly(benzobis-imidazobenzo-phenanthrolin) (BBL) mit entsprechendem Endcapping erfolgte analog der Literaturvorschrift von Arnhold et al. (F. E. Arnold, R. L. van Deusen, Macromolecules 1969, 2, 497-502). Prozentangaben beziehen sich, soweit nichts anderes angegeben ist, auf Gewichtsprozente.

### Herstellung stabiler wässriger und organischer Dispersionen

Zunächst wurde eine 1 %-ige (Gewichtsprozent) BBL-Lösung in Methansulfonsäure hergestellt. Dazu wurden 100 mg des BBL in 10 g Methansulfonsäure gelöst. Außerdem wurde eine wässrige 1 %-ige Tensidlösung mit T150 realisiert. Bei T150 handelt es sich um ein grenzflächenaktives Genamin (Hoechst) aus der Reihe der Talgfettamin-Oxethylate mit 15 Molekülen Ethylenoxid je Molekül Talgfettamin. In 100 ml dieser Tensidlösung wurden dann unter Beschallung mit dem Ultaschall-Homogenisator HD 2200 (HF-Leistung 200 W; HF-Frequenz 20 kHz) mit maximaler Leistung innerhalb von 4 min mit einer Pipette langsam die BBL-Methansulfonsäurelösung eingebracht. Anschließend wurde die Lösung noch weitere 4 min beschallt. Die so erhaltene Dispersion wurde zentrifugiert (45 min; 4500 Umdrehungen/min). Das Zentrifugat wurde von der überstehenden Lösung abdekantiert und wiederholt in Wasser aufgenommen und wieder zentrifugiert. Dieses Verfahren wurde solange wiederholt, bis der pH-Wert der Waschlösungen neutral war (zirka 4 - 6 Mal). Das Zentrifugat wurde erneut in einer Wasser/Tensid-Lösung (10 ml einer 1 %-igen bzw. 0.1 %-igen Lösung von T150 in Wasser) unter Ultraschallbehandlung mit maximaler Leistung redispergiert (4 min Ultraschall). Daraus resultieren stabile Dispersionen mit Teilchengrößen im Bereich von 15 bis 100 nm.

### Redispersion in Tetrahydrofuran

In diesem Fall wurde das neutral gewaschene Zentrifugat in einer Tetrahydrofuran/Tensid-Lösung (10 ml einer 0.1 %-igen Lösung von T150 in Tetrahydrofuran) unter Ultraschallbehandlung redispergiert (4 min Ultraschall, maximale Leistung). Daraus resultieren auch stabile organische Dispersionen mit Teilchengrößen im Bereich von < 100 nm.

### Charakterisierung der Teilchen

Die durchschnittlichen Teilchengrößen wurden mittels Ultrazentrifuge bestimmt und durch rasterelektronische Aufnahmen bestätigt. Die rasterelektronischen Aufnahmen erfolgten mit einem Gerät des Typs JSM6330F der Firma Joel. Die Probenpräparation wurde folgendermaßen durchgeführt: Ein Objektträger wurde mit der entsprechenden Probe durch Auftropfen beschichtet und anschließend wurde eine 4 nm dicke Schicht Platin aufgesputtert. Die so präparierte Probe wurde bei einer Beschleunigungsspannung von 5 kV untersucht.

Die Ergebnisse für erfindungsgemäße Dispersionen in verschiedenen Dispersionsmedien sind in Tabelle 1 zusammengefasst.

**Tabelle 1**

| Durchschnittliche Teilchengrößen für Proben erfindungsgemäßer Dispersionen von Poly(benzobisimidazobenzo-phenanthrolin) (BBL) in verschiedenen Dispersionsmedien (Feststoffgehalt jeweils 1%) | | | |
|---|---|---|---|
| **Probe Nr.** | **Dispersionsmedium** | **durchschnittliche Teilchengröße** | **siehe Figur(en)** |
| 1 | 0,1%-ige Tensid/Wasserlösung | 25 - 50 nm | 1 |
| 2 | 1%-ige Tensid/Wasserlösung | 15 - 30 nm | 2 |
| 3 | 0,1%-ige Tensid/THF-Lösung | 25 - 50 nm | 3,4 |

### Aufbau eines organischen Feldeffekttransistors (n-type)

Aktive Ladungsträgerschichten in elektronischen Bauelementen mit Schichtdicken von 800 bis 15 nm (begrenzt durch die Partikelgröße), wie z.B. in einem organischer Feldeffekttransistor (OFET), wurden durch Tropfen oder auch Spin-coating der stabilen wässrigen Dispersionen mit Feststoffgehalten von 10 bis 0,5 % sowie Tensidgehalten von 10 bis 0,05 % und anschließendem Trocknen der Schicht realisiert.

Es wurden Feldeffekttransistoren in Bottom-Gate Struktur aufgebaut. Die verwendeten OFET-Strukturen waren wie folgt gekennzeichnet: Source-Drain (Aluminium) Abstand: 20 µm, W/L-Verhältnis: 360, Gateschichtdicke (SiO₂): 500 nm.

Die wässrige 1 %-ige tensidhaltige Dispersion mit einem Feststoffgehalt von 1 % an Poly(benzobisimidazobenzo-phenanthrolin) (BBL)-Teilchen (Tabelle 1, Probe Nr. 2) wurde in einer Glove-Box auf eine Transistorstruktur aufgetropft und anschließend zum Entfernen des Wassers 2 Stunden bei 110°C getempert.

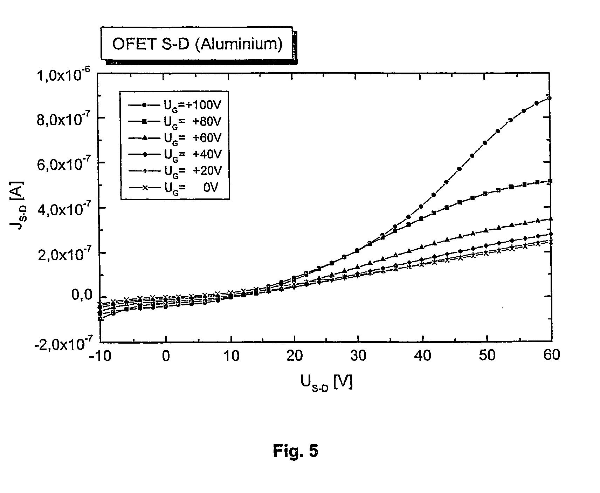

Die Kennlinien einer so erhaltenen OFET-Struktur mit Poly(benzobisimidazobenzophenanthrolin) (BBL)-Teilchen sind in Figur 5 gezeigt. Diese zeigen einen deutlichen Feldeffekt (Fig. 5) und ein Sättigungsverhalten, aus denen dann die Ladungsträgerbeweglichkeiten bestimmt wurden.

Aus dem Kennlinienfeld des OFETs mit Poly(benzobisimidazobenzo-phenanthrolin) (BBL)-Teilchen wurde eine Ladungsträgermobilität von maximal 1,2 x 10-⁵ cm²/Vs berechnet.

## Patentansprüche

1. Verfahren zur Herstellung einer Dispersion eines steifkettigen, konjugierten, in organischen Lösungsmitteln unlöslichen Polymers in einem wässrigen oder organischen oder wässrig-organischen Dispersionsmedium, umfassend die Stufen:
a) Herstellen einer Lösung des Polymers in einer starken Säure oder in einem flüssigen Gemisch, das eine Lewis-Säure enthält; und
b) Einbringen der in der Stufe a) hergestellten Lösung in eine wässrige Tensid-Lösung, so dass eine Dispersion des Polymers entsteht.

2. Verfahren nach Anspruch 1, wobei nach der Stufe b) des Weiteren folgende Stufen durchgeführt werden:
c) Abtrennen des dispersen Polymers von der flüssigen Phase der in der Stufe b) erhaltenen Dispersion;
d) Waschen des abgetrennten Polymers;
e) Redispergieren des gewaschenen Polymers in einer wässrigen oder organischen Tensid-Lösung.

3. Verfahren nach einem der voran stehenden Ansprüche, wobei die Stufe b) und ggf. die Stufe e) unter Einwirkung von Ultraschall durchgeführt wird.

4. Verfahren nach einem der voran stehenden Ansprüche, wobei das steifkettige, konjugierte Polymer ausgewählt ist aus der Gruppe bestehend aus aromatischen heterocyclischen Leiterpolymeren, Polychinolinen, Polybenzthiazolen, Polybenzimidazolen, Polyheterodiazolen und Gemischen davon.

5. Verfahren nach einem der voran stehenden Ansprüche, wobei das steifkettige, konjugierte Polymer Poly(benzobisimidazobenzo-phenanthrolin) (BBL) ist.

6. Verfahren nach einem der voran stehenden Ansprüche, wobei die in der Stufe a) eingesetzte starke Säure Methansulfonsäure oder konzentrierte Schwefelsäure ist.

7. Verfahren nach einem der voran stehenden Ansprüche, wobei in der Stufe a) eine Lösung des Polymers in einem Nitroalkan/Lewis-Säure-Gemische hergestellt wird.

8. Verfahren nach einem der voran stehenden Ansprüche, wobei das in der Stufe b) bzw. in der Stufe e) eingesetzte Tensid ausgewählt ist aus der Gruppe bestehend aus Ethoxylaten, Polyethylenglykolen und Fettamin-Oxethylaten.

9. Verfahren nach einem der voran stehenden Ansprüche, wobei der Gehalt des Polymers in der in der Stufe a) hergestellten Lösung 0,1 bis 5 Gew.-% beträgt.

10. Verfahren nach einem der voran stehenden Ansprüche, wobei der Tensidgehalt der in den Stufen (b) bzw. (e) eingesetzten Tensidlösung 0,01 bis 5 Gew.-% beträgt.

11. Verfahren nach einem der voran stehenden Ansprüche, wobei die Größe der dispergierten Polymerteilchen in der hergestellten Dispersion im Bereich von 10 bis 800 nm liegt.

12. Dispersion eines steifkettigen, konjugierten, in organischen Lösungsmitteln unlöslichen Polymers in einem wässrigen oder organischen oder wässrig-organischen Dispersionsmedium, wobei die Größe der dispergierten Polymerteilchen im Bereich von 10 bis 800 nm liegt.

13. Dispersion nach Anspruch 12, wobei das Dispersionsmedium im Wesentlichen aus Wasser oder einer Mischung aus Wasser und einem mit Wasser mischbaren organischen Lösungsmittel besteht.

14. Verwendung einer Dispersion nach einem der Ansprüche 12 oder 13 zur Herstellung eines dünnen Films eines steifkettigen, konjugierten Polymers.

15. Verwendung einer Dispersion nach einem der Ansprüche 12 oder 13 zur Herstellung eines elektronischen Bauelements.

16. Verwendung nach Anspruch 15, wobei das elektronische Bauelement ein Feldeffekttransistor, eine organische Leuchtdiode oder eine photovoltaische Zelle ist.

## Claims

1. Method for the production of a dispersion of a rigid-chain, conjugated polymer that is insoluble in organic solvents in an aqueous or organic or aqueous-organic dispersion medium, comprising the steps:
a) producing a solution of the polymer in a strong acid or in a liquid mixture containing a Lewis acid; and
b) incorporating the solution produced in step a) into an aqueous surfactant solution so that a dispersion of the polymer is formed.

2. Method according to Claim 1, wherein after step b) the following steps are additionally performed:
c) separating the disperse polymer from the liquid phase of the dispersion obtained in step b);
d) washing the separated polymer;
e) re-dispersing the washed polymer in an aqueous or organic surfactant solution.

3. Method according to one of the preceding claims, wherein step b) and possibly step e) is/are performed under the effect of ultrasound.

4. Method according to one of the preceding claims, wherein the rigid-chain, conjugated polymer is selected from the group comprising aromatic heterocyclic ladder polymers, polyquinolines, polybenzthiazoles, polybenzimidazoles, polyheterodiazoles and mixtures thereof.

5. Method according to one of the preceding claims, wherein the rigid-chain, conjugated polymer is poly(benzobisimidazobenzo-phenanthroline) (BBL).

6. Method according to one of the preceding claims, wherein the strong acid used in step a) is methane sulphonic acid or concentrated sulphuric acid.

7. Method according to one of the preceding claims, wherein a solution of the polymer in a nitroalkane/Lewis acid mixture is produced in step a).

8. Method according to one of the preceding claims, wherein the surfactant used in step b) or in step e) is selected from the group comprising ethoxylates, polyethylene glycols and fatty amine oxethylates.

9. Method according to one of the preceding claims, wherein the content of the polymer in the solution produced in step a) amounts to 0.1 to 5 % by weight.

10. Method according to one of the preceding claims, wherein the surfactant content of the surfactant solution produced in steps b) or e) amounts to 0.01 to 5 % by weight.

11. Method according to one of the preceding claims, wherein the size of the dispersed polymer particles in the produced dispersion lies in the range of 10 to 800 nm.

12. Dispersion of a rigid-chain, conjugated polymer that is insoluble in solvents in an aqueous or organic or aqueous-organic dispersion medium, wherein the size of the dispersed polymer particles lies in the range of 10 to 800 nm.

13. Dispersion according to Claim 12, wherein the dispersion medium substantially consists of water or a mixture of water and an organic solvent mixable with water.

14. Use of a dispersion according to one of Claims 12 or 13 for the production of a thin film of a rigid-chain, conjugated polymer.

15. Use of a dispersion according to one of Claims 12 or 13 for the production of an electronic component.

16. Use according to Claim 15, wherein the electronic component is a field effect transistor, an organic light-emitting diode or a photovoltaic cell.

## Revendications

1. Procédé de fabrication d'une dispersion d'un polymère conjugué à chaînes rigides, insoluble dans des solvants organiques, dans un milieu de dispersion aqueux ou organique ou aqueux-organique, comprenant les étapes suivantes:
a) fabrication d'une solution du polymère dans un acide fort, ou dans un mélange liquide contenant un acide de Lewis; et
b) ajout de la solution fabriquée à l'étape a) dans une solution aqueuse d'agent tensioactif, de façon à créer une dispersion du polymère.

2. Procédé selon la revendication 1, selon lequel
on exécute en plus les étapes suivantes après l'étape b):
c) séparation du polymère dispersé de la phase liquide de la dispersion obtenue dans l'étape b);
d) lavage du polymère séparé;
e) re-dispersion du polymère lavé dans une solution aqueuse ou organique d'agent tensioactif.

3. Procédé selon l'une quelconque des revendications précédentes, selon lequel on exécute l'étape b) et, le cas échéant, l'étape e) en présence d'ultrasons.

4. Procédé selon l'une quelconque des revendications précédentes, selon lequel on sélectionne le polymère conjugué à chaînes rigides dans le groupe composé des polymères échelles hétérocycliques aromatiques, des polyquinoléines, des polybenzothiazoles, des polybenzimidazoles, des polyhétérodiazoles, et des mélanges de ceux-ci.

5. Procédé selon l'une quelconque des revendications précédentes, selon lequel le polymère conjugué à chaînes rigides est le poly-(benzobisimidazobenzo-phénanthroline) (BBL).

6. Procédé selon l'une quelconque des revendications précédentes, selon lequel l'acide fort employé dans l'étape a) est l'acide méthane-sulfonique ou l'acide sulfurique concentré.

7. Procédé selon l'une quelconque des revendications précédentes, selon lequel on produit à l'étape a) une solution du polymère dans un mélange nitroalkane/acide de Lewis.

8. Procédé selon l'une quelconque des revendications précédentes, selon lequel on sélectionne l'agent tensioactif employé dans l'étape b) ou dans l'étape e) dans le groupe composé des éthoxylates, des polyéthylène glycols et des oxéthylates d'amine gras.

9. Procédé selon l'une quelconque des revendications précédentes, selon lequel la teneur en polymère dans la solution fabriquée dans l'étape a) est de 0,1 à 5 % en poids.

10. Procédé selon l'une quelconque des revendications précédentes, selon lequel la teneur en agent tensioactif de la solution d'agent tensioactif employée dans les étapes b) ou e) est de 0,01 à 5 % en poids.

11. Procédé selon l'une quelconque des revendications précédentes, selon lequel la grosseur des particules de polymère dispersées dans la dispersion fabriquée se situe dans la plage de 10 à 800 nm.

12. Dispersion d'un polymère conjugué à chaînes rigides, insoluble dans une solution organique, dans un milieu de dispersion aqueux ou organique ou aqueux-organique, dans laquelle la grosseur des particules de polymère dispersées se situe dans la plage de 10 à 800 nm.

13. Dispersion selon la revendication 12, dans laquelle le milieu de dispersion se compose essentiellement d'eau ou d'un mélange d'eau et d'un solvant organique miscible avec l'eau.

14. Utilisation d'une dispersion selon l'une quelconque des revendications 12 ou 13 pour la fabrication d'un mince film d'un polymère conjugué à chaînes rigides.

15. Utilisation d'une dispersion selon l'une quelconque des revendications 12 ou 13, pour la fabrication d'un composant électronique.

16. Utilisation selon la revendication 15, dans laquelle le composant électronique est un transistor à effet de champ, une diode électroluminescente organique ou une cellule photovoltaïque.
